# EUROPEAN PATENT APPLICATION

(11) **EP 4 764 753 A1**
(43) Date of publication of application: **24.06.2026**
(21) Application number: 25221741.9
(22) Date of filing: 09.12.2025
(51) Int. Cl.: G05B 19/418, B29C 65/00, G06N 20/00, B29C 65/18, B29C 65/08, B29C 65/36, B65B 51/14, B65B 57/02, B29C 65/74

(54) **ARTIFICIAL INTELLIGENCE-BASED TRANSVERSAL SEALING QUALITY MONITORING**

(30) Priority: 23.12.2024 IT 202400029787
(71) Applicant: Tetra Laval Holdings & Finance S.A., 1009 Pully (CH)
(72) Inventor: CAPELLI, Luca, 41123 MODENA (IT); DIGANI, Andrea, 41123 Modena (IT)
(74) Representative: Tetra Pak Patent Attorneys

(57) **Abstract**

A method for monitoring a transversal sealing process 200 involves receiving measurement data 304 from a packaging line 100. A trained machine-learning model 302, which is fed with the measurement data 304, generates a quality indicator 306 that reflects the status of at least one package 102's transversal sealing 104. This approach allows real-time quality control and enhances productivity by identifying potential issues or deviations from the standard sealing process.

## Description

### TECHNICAL FIELD

This disclosure relates to methods for monitoring transversal sealing processes in packaging lines using machine learning.

### BACKGROUND

The transversal sealing process in tube-based packaging lines is a critical component of the entire production line, and the operation thereof is monitored and improved. Currently, the quality of the transversal sealing, sometimes also referred to as tube sealing, is typically ensured through manual inspection of sampled packages, which are collected regularly or randomly throughout production.

However, this approach is prone to human error.

Some development efforts in this field have picked up on the idea of using machine-learning and self-learning algorithms for improving sealing processes. For example, WO 2020/260278 A1 discloses a package seal control system which monitors a longitudinal seal extending in a direction conforming to a direction of flow of a packaging material in a packaging and filling machine. Machine-learning algorithms may be employed to allow improved accuracy of assessments overtime of the monitored longitudinal seal's spectral data and spatial data to provide improvements of the longitudinal seal's position, condition, and performance.

As another example, WO 2004/099751 A2 discloses a method for the on-line inspection of the air-tightness of a package. The method comprises acquiring a noise signal generated by the sealing equipment during the sealing of the package, analyzing the signal to determine at least one physical parameter characterizing the noise signal, and deciding on the quality of the sealing by comparing the determined value to a reference value for said physical parameter. The dynamics of the sealing process may be captured by a self-learning system.

While such approaches show promise, further improvements are still possible and desirable to address the drawbacks of the known systems.

It is therefore an objective of the present disclosure to provide improved techniques for monitoring transversal sealing processes in packaging lines, thereby overcoming the drawbacks of the prior art at least in part.

### SUMMARY OF THE DISCLOSURE

The above and other objectives may be achieved by the subject-matter defined by the independent claims. Advantageous modifications of embodiments of the present disclosure are defined in the dependent claims as well as in the description and the drawings.

Certain aspects disclosed herein relate to monitoring and improving the efficiency of a packaging line. A machine-learning model is used to analyze measurement data and predict a quality indicator related to the transversal sealing process. For instance, this allows operators to take corrective actions in real-time, potentially reducing defects and/or improving overall product quality.

One aspect of the present disclosure provides a method of monitoring a transversal sealing process in a packaging line. The packaging line may be a packaging line for producing packages from a multilayer packaging material. The method may comprise receiving measurement data relating to the transversal sealing process. The method may also comprise generating, by a trained machine-learning model which receives as an input the measurement data, a quality indicator of a transversal sealing of at least one package produced in the packaging line.

This offers an innovative approach to enhancing the efficiency and reliability of transversal sealing in packaging lines. Initially, sensors or other measuring devices may collect relevant data points during the process. This measurement data serves as input for a trained machine-learning model that is configured to analyze and interpret these parameters in relation to the quality of the seal formed on at least one, preferably each, package. The machine learning model may be built using historical packaging line data, where it learns patterns between various measurements and their corresponding outcomes (i.e., whether a particular transversal seal was successful or not). It may employ techniques such as regression analysis, decision trees, neural networks, or other suitable algorithms to establish correlations between the input parameters and the quality of the sealing process. Once trained, the machine-learning model can be integrated into the packaging line's operational flow. As packages move along the packaging line, the collected measurement data is fed into the machine-learning model in real-time or near-real-time to generate a quality indicator for at least one package, ideally for each package. By providing instant feedback on sealing quality throughout the production process, this aspect enables operators and maintenance personnel to identify any anomalies in the transversal sealing procedure promptly. They can then take corrective actions such as adjusting machine settings or scheduling preventative maintenance to address any underlying issues that may be impacting the overall efficiency of the packaging line. In summary, this aspect combines real-time measurement data collection with advanced machine-learning to provide a reliable and efficient way of monitoring transversal sealing processes in packaging lines. This results in enhanced product quality control, reduced waste due to poorly sealed packages, and improved overall operational efficiency for the manufacturing facility.

It may be provided that the measurement data is received while the at least one package is produced in the packaging line.

In the context of monitoring a transversal sealing process in a packaging line, receiving measurement data while at least one package is being produced refers to the real-time collection and analysis of relevant parameters during the packaging process. This continuous flow of information allows for immediate evaluation of the quality and effectiveness of the transversal sealing procedure as it occurs on the packaging line. To achieve this, sensors or other measurement devices may be strategically placed within the packaging line to capture relevant data points. For example, certain aspects disclosed herein may use control system parameters which are already present in a control system of the packaging line. Such data may be filtered for the specific function. Additional sensors may be used if relevant information is missing from the control system. For example, for a transversal sealing process monitoring, the generator data (commands and/or feedback) may be used in combination with product one or more of aseptic chamber temperature, tube twisting control, tune velocity, edges overlap, design correction, etc. These parameters may already be present in the control system but, in certain configurations, might be not enough to have under control the entire set of relevant function parameters. For this reason, sensing of the pressure might be added (direct or indirect). When a direct measurement is possible (such as with a two-arms machine where the pressure is applied by hydraulics), a specific sensor on the hydraulics may be added. When a direct measurement is not possible, these data may be inferred from other parameters, such as generated by a model that uses an indirect measure such as vibrations.

These real-time measurements provide a detailed understanding of how each package is being sealed in comparison to previous successful cases or predefined quality standards set for the product. This continuous acquisition of measurement data offers several benefits:
1. Immediate Quality Assessment: The machine-learning model receives up-to-date information about the transversal sealing process, enabling it to generate instantaneous quality indicators that reflect the current status of each package being produced.
2. Early Detection of Issues: By continuously monitoring key parameters during the production cycle, potential problems can be identified at an early stage before they escalate into more significant issues or cause defective products to reach end-consumers.
3. Process Optimization: Real-time measurement data allows for ongoing process optimization by providing insights into how changes in machine settings or environmental conditions affect the transversal sealing quality, enabling operators and engineers to fine-tune processes accordingly.
4. Enhanced Traceability: The collection of real-time measurement data creates an audit trail that can be used for traceability purposes, allowing manufacturers to identify root causes in case of product recalls or customer complaints.

In summary, receiving and analyzing measurement data while at least one package is produced within the packaging line enables a comprehensive understanding of the transversal sealing process's dynamics, leading to improved quality control, faster problem resolution, and overall operational efficiency in manufacturing environments.

It may be provided that the generated quality indicator relates to an individual package produced in the packaging line. The method may comprise associating the generated quality indicator with a unique identifier of the individual package.

Generating quality indicators for individual packages within a packaging line offers numerous benefits that extend beyond the overall performance of the production process. These advantages include:
1. Improved Product Quality and Customer Satisfaction: By providing immediate feedback on each package's sealing quality, manufacturers can ensure consistent product standards across batches and reduce the likelihood of defective products reaching end-users. This results in higher customer satisfaction, fewer returns or complaints, and an enhanced reputation for reliability and quality assurance.
2. Enhanced Traceability: Individual package quality indicators create a detailed record of each product's sealing performance throughout the production process. In case of issues such as recalls or investigations into potential defects, this traceability allows manufacturers to identify root causes quickly and develop targeted solutions that address specific concerns related to individual packages.
3. Data-Driven Decision Making: The collection of individual package quality indicators allows manufacturers to analyze data trends over time, enabling them to make informed decisions about process improvements, equipment upgrades, and staff training initiatives that enhance overall productivity and efficiency while maintaining high sealing standards.

In summary, generating quality indicators for individual packages within a packaging line offers numerous benefits that contribute to improved product quality, enhanced traceability, greater control over production processes, increased operational efficiency, reduced waste, streamlined quality assurance procedures, and data-driven decision making.

It may be provided that the above-mentioned associating step comprises encoding the generated quality indicator in a machine-readable code printed on the individual package.

Such an encoding allows for efficient communication between different stages of manufacturing operations by providing standardized information about each package's sealing performance that can be easily interpreted and acted upon. By encoding generated quality indicators onto individual packages using machine-readable codes, manufacturers can streamline their operations by facilitating seamless data exchange between different stages of production, enabling real-time monitoring and control over the packaging process's quality performance. This approach enhances traceability, improves decision making, reduces errors, and ultimately contributes to higher productivity, efficiency, and customer satisfaction in the manufacturing industry.

The encoding of quality indicators on packages may comprise one or more of the following steps:
1. Selection of Encoding Method: Manufacturers may choose a suitable method for representing the generated quality indicator in a machine-readable format, such as barcodes or RFID tags. Barcode labels are commonly used due to their cost-effectiveness and compatibility with existing scanning equipment. However, other encoding methods like QR codes or RFID chips may be chosen based on specific production requirements.
2. Designing the Encoding Scheme: The chosen encoding method involves the creation of an appropriate scheme that assigns unique identifiers to different quality indicators while maintaining a clear and unambiguous representation for each value. For example, a barcode label might use a series of bars or spaces (binary code) to represent numerical values or specific categories like pass/fail classifications.
3. Integration with Quality Indicator System: The encoding scheme may be integrated with the machine-learning model used to generate quality indicators, ensuring that each generated value is accurately and consistently represented in a machine-readable format on package labels.
4. Label Printing: Once the encoding scheme has been established, it may be implemented during the label printing process for each individual package. This may involve incorporating barcode readers or RFID scanners into production lines and ensuring that labels are printed accurately to maintain data integrity throughout the manufacturing lifecycle.
5. Data Collection and Analysis: The machine-readable codes on packages allow for efficient collection, tracking, and analysis of quality indicators across different stages of the packaging line's operations. With barcode readers or RFID scanners integrated into production lines, data can be automatically captured, stored in a central database, and analyzed to identify trends, make process improvements, and ensure consistent product quality standards are met.

It may be provided that the method comprises displaying the generated quality indicator on an electronic display for use in a quality monitoring process, in particular a real-time quality monitoring process.

Displaying the generated quality indicator on an electronic display for use in a (real-time) quality monitoring process is beneficial for ensuring immediate visibility and actionable insights into the packaging line's sealing performance. By analyzing the displayed quality indicators, operators can quickly identify outliers or deviations from expected standards and take corrective actions to address any issues promptly. This proactive approach helps maintain high product quality while reducing waste, improving efficiency, and enhancing customer satisfaction. By displaying generated quality indicators on electronic displays for real-time monitoring purposes, manufacturers can ensure a more agile, transparent, and responsive packaging line that delivers consistent performance and superior products to customers. This approach also facilitates continuous improvement in the production process by providing valuable feedback and insights into individual package sealing quality across different stages of operations.

It may be provided that the method comprises generating, based at least in part on the generated quality indicator, a control signal for the packaging line.

The method of generating a control signal based on the generated quality indicator establishes a direct link between machine learning-driven sealing performance data and physical reality within the packaging line. This approach allows for real-time adjustments to be made in response to package quality, ensuring optimal production efficiency while maintaining high product standards. By leveraging this feedback loop, manufacturers can dynamically control various aspects of their packaging lines, resulting in improved overall performance and reduced waste. Several ways the generated quality indicator-based control signal may influence physical reality within a packaging line can include:
1. Adjusting Sealing Parameters: The control signal may modify transversal sealing parameters, such as pressure settings, temperature levels, or cycle times for individual packages based on their quality indicators. For example, if a package's generated quality indicator suggests suboptimal sealing performance due to low pressure, the system can automatically increase the pressure setting for that specific machine head in real-time without interrupting the entire packaging line process.
2. Modifying Machine Speed: In cases where the quality indicators reveal variations in package integrity or consistency across different production batches, manufacturers might adjust the speed of the sealing machines to allow more time for proper sealing or ensure a consistent output rate without compromising product quality.
3. Altering Material Flow Rates: The control signal can also be used to regulate material flow rates into the packaging line based on real-time data from individual package quality indicators. For instance, adjustments in feeding mechanisms and conveyor speeds can be made according to the quality indicator generated.
4. Operator Alerts: The generated control signal may trigger alerts for operators when quality indicators fall outside of predefined thresholds. These notifications prompt immediate action to address any issues that might affect product quality or cause disruptions in the packaging line, such as equipment malfunctions.
5. Feedback Loop Integration: By integrating control signals with feedback loops within the production process, manufacturers can create a closed-loop system where data from sealing performance is continuously fed back into machine-learning models to refine and improve their accuracy over time. This iterative approach allows for finer adjustments in real-time based on accumulated knowledge about package quality trends across the production line.

It may be provided that the machine-learning model is deployed on a data processing apparatus separate from a main controller of the packaging line.

Deploying the machine-learning model on a separate data processing apparatus from the main controller of the packaging line allows for specialized, focused analysis of the measurement data. This architectural choice provides several advantages that enhance process efficiency, productivity, and adaptability to changing production demands or conditions:
1. Specialized Data Processing: Separate data processing apparatuses can be tailored specifically for handling large volumes of sealing performance data generated by individual packages, allowing more efficient and effective analysis compared to using general-purpose controllers primarily designed for broader operational control tasks.
2. Faster Response Times: By isolating the machine-learning model from the main controller, it can operate independently without being affected by other system processes or potential bottlenecks that may slow down decision-making in a centralized setup. This separation enables quicker response times to changes detected in sealing performance and facilitates real-time adjustments within the packaging line.
3. Reduced System Complexity: Deploying machine learning models on separate apparatuses can simplify system design, as it separates data processing tasks from control functions. This separation helps reduce complexity, minimize potential points of failure, and improve maintainability by allowing specialized hardware or software to handle specific responsibilities without affecting other components in the production line.
4. Scalable Architecture: Separate machine-learning models can be deployed on dedicated platforms that are scalable based on demand, enabling manufacturers to add more processing power and storage capacity as needed for handling increasing data volumes or improving predictive capabilities.
5. Enhanced Flexibility in Adaptation: With a separate machine learning model, the packaging line can adapt more quickly to changes in production requirements or new product lines by updating or retraining models without impacting overall system performance. This flexibility allows manufacturers to leverage emerging technologies and methodologies for continuous improvement while maintaining consistent output quality across different stages of operations.
6. Improved Data Security: Separating data processing apparatuses can also enhance data security by isolating sensitive information related to sealing performance from the main controller, which may handle other critical operational aspects. This segregation helps protect proprietary algorithms and maintain confidentiality while still enabling real-time analysis for quality control purposes.

It may be provided that the measurement data includes one or more of process parameters, control parameters, and additional sensor measurements.

Process parameters may be parameters which are already present in the automation system. Such process parameters may be aggregated by package ID

Control parameters may be parameters which are already present in the automation system and/or control system(s), such as power generators for the transversal sealing process. Such control parameters may be sampled at a high frequency and aggregated per package ID. Analytics may be applied to extract key health indicators that reflect the power transfer efficiency, as will be explained in more detail in the detailed description further below.

Additional sensor measurements may relate, for example, to measurements relating to the monitoring of a pressure application system (e.g., vibrations and analytical model) or pressure sensor(s) for catchers in case of, e.g. a filling machine where the pressure is guaranteed by a hydraulic system. Also in this case, the data may be collected at high frequency and an analytics and/or AI model may be used to extract key health indicators, as will be explained in more detail in the detailed description further below.

Additional sensor measurements may relate, for example, to measurements relating to a sensor of a cutting system (e.g., vibration sensors and/or pressure sensors). Also in this case, data may be collected at a high frequency (e.g., 20KHz), and key health indicators may be extracted and aggregated by package ID.

It may be provided that the measurement data includes one or more of a measured electrical parameter (including frequency, phase, power set, power measured, current, voltage), an aggregated electrical parameter (including frequency, impedance, phase and/or power out), a derived parameter (including seal time, energy and/or power error), a jaw system vibration parameter, or any combination thereof.

The inclusion of various types of parameters in the measurement data used for monitoring sealing performance is helpful to understanding a wide range of factors that impact package quality. This comprehensive approach allows machine-learning models to capture nuanced patterns within the transversal sealing process, enabling more accurate predictions and control over individual package sealing outcomes. The various parameters can be grouped into several categories:
1. Basic Electrical Parameters: These may include frequency (Hz), phase (degrees or radians), power set (watts, kilowatts, etc.), and current/voltage values (amperes, volts). Such parameters provide fundamental insights into the electrical characteristics of sealing machines during operation. For example, monitoring voltage levels can help detect potential issues with motor performance or power supply inconsistencies that may affect seal quality.
2. Aggregated Electrical Parameters: These may be derived from one or multiple basic parameters and represent a more holistic view of the electrical system's health. Examples include frequency (Hz), impedance (ohms), phase angle (degrees or radians), and power out (watts, kilowatts). Aggregated metrics like these can help identify abnormalities in machine operation that may not be immediately apparent from individual parameters alone, such as detecting an imbalanced load causing a change in impedance.
3. Derived Parameters: These may be calculated values based on the measured electrical data and provide insights into specific aspects of sealing performance. Examples include seal time (seconds), e.g. of one or more packages, energy consumption (joules or kilojoules), and power error (percentage deviation from a target value).
4. Jaw System Vibration Parameters: These parameters may focus on the mechanical aspects of sealing and may include jaw system vibrations (measured in millimeters/degrees). Monitoring these metrics allows for detecting issues related to machine stability, alignment, or material handling that can impact seal integrity. For example, excessive vibration may indicate worn-out components or improper settings.

By incorporating a selected combination of these parameters into the measurement data, machine-learning models have access to rich information about the entire sealing process's environmental and operational conditions. This multi-faceted dataset enables more precise analysis and predictions regarding potential issues that may affect package quality, allowing for targeted interventions and adjustments in real time.

The integration of various electrical parameters and derived metrics into machine learning models further enhances their ability to adaptively learn from the data, refine algorithms over time, and continuously improve sealing performance across different production scenarios and conditions. This comprehensive approach ultimately contributes to maintaining consistent quality standards in packaging operations while optimizing process efficiency and reducing waste.

It may be provided that the quality indicator is a binary indicator.

A binary quality indicator is a simplified, two-value representation used to classify the sealing performance of packages into either 'acceptable' or 'unacceptable'. In this context, the binary values typically represent these categories:
- Acceptable: This value indicates that the package has met all predefined criteria for quality based on factors such as absence of defects, and adherence to performance standards. Packages marked with an 'acceptable' indicator are considered ready for distribution or further processing in the production line.
- Unacceptable: This value signifies that a package failed to meet the quality criteria set by the manufacturer. Factors contributing to this classification may include defects, inconsistencies, anomalies, or deviations from standard operating procedures during packaging. Packages marked with an 'unacceptable' indicator may be discarded before being processed further in the production line.

A binary quality indicator may offer several benefits for sealing performance monitoring:
1. Simplification of Decision-Making: By reducing complex data into two distinct categories, decision-making becomes more straightforward. This simplification allows operators, managers, or automated systems to quickly assess package quality and take appropriate actions without the need for extensive analysis or interpretation of intricate metrics.
2. Automation Compatibility: Binary indicators are compatible with many automated control systems that rely on threshold-based decision rules. These systems can easily compare measured data against predefined thresholds to determine whether a package meets quality standards, allowing seamless integration into existing production lines without requiring significant modifications or customizations.
3. Compatibility with Machine-learning models: Binary quality indicators can be effectively used as target variables in machine-learning models for predictive maintenance and anomaly detection. The two-value nature of these labels simplifies model training, interpretation, and evaluation by providing clear distinctions between acceptable and unacceptable outcomes. This binary representation is particularly useful when developing supervised classification algorithms that aim to classify new observations based on learned patterns in the data.
4. Easy Integration into Quality Control Processes: The simplicity of a binary quality indicator allows for easy integration with existing quality control processes, such as inspection stations or automated sorting systems. This ease of implementation facilitates quicker adoption and less disruption to ongoing operations while still providing accurate information about sealing performance.

It may be provided that the machine-learning model comprises a classifier trained on a labelled training data set using supervised learning.

A machine-learning model comprising a classifier trained on labeled training data sets using supervised learning is an algorithm designed to categorize or predict outcomes based on predefined categories (labels) associated with input features. In the context of monitoring sealing performance, such a model can be utilized to analyze complex and diverse datasets derived from various sensors and measurement devices within the packaging line.

A process involved in creating this type of machine-learning classifier may include one or more of the following:
1. Data Collection: A labeled dataset may be collected, comprising or consisting of input features (e.g., electrical parameters, seal time, energy consumption) along with corresponding labels indicating whether each sample represents an acceptable or unacceptable seal quality outcome. These data are typically gathered from historical production records, sensor readings, and/or expert-annotated samples.
2. Data Preprocessing: Before training the classifier, raw data may undergo preprocessing steps to ensure that it is clean, normalized, and ready for analysis. This includes handling missing values, removing outliers, encoding categorical variables, scaling numerical features, and reducing dimensionality if desired.
3. Model Selection: Various supervised learning algorithms can be employed to build the classifier, such as logistic regression, decision trees, random forest, support vector machines (SVM), k-nearest neighbors (KNN), or neural networks. The choice of model depends on factors like data complexity, desired accuracy, computational resources, and interpretability requirements. These models are trained to learn patterns in the labeled training data that relate input features to their corresponding labels.
4. Model Training: During the training phase, the classifier algorithm iteratively adjusts its parameters (e.g., weights or coefficients) based on a loss function and optimization method (e.g., gradient descent). The goal is to minimize prediction errors by finding an optimal decision boundary that best separates acceptable from unacceptable outcomes in the feature space.
5. Model Evaluation: Once trained, the classifier's performance is assessed using a separate labeled validation or test dataset not used during training. This evaluation may involve calculating metrics like accuracy, precision, recall, F1-score, and confusion matrix to measure how well the model generalizes its learned patterns to unseen data.
6. Deployment: After successful evaluation, the trained classifier may be deployed within the sealing performance monitoring system as a predictive tool that can analyze real-time and/or historical sensor data from the production line.

By leveraging supervised learning, the machine-learning model may offer significant benefits in sealing performance monitoring, including:
1. Enhanced Accuracy: Machine learning algorithms can capture complex relationships between input features and output labels that may be difficult to model using traditional rule-based approaches. This ability improves the accuracy of quality predictions and reduces false positives or negatives, which is crucial for maintaining high standards in sealing performance.
2. Continuous Improvement: Supervised learning models can adapt over time as they receive new labeled data from ongoing production operations. As more examples are added to the training dataset, these models refine their understanding of patterns and improve their predictive capabilities, leading to better long-term performance.
3. Automation Compatibility: Machine learning classifiers integrate well with existing automated control systems in the packaging line. These algorithms can be used as input for decision-making processes or integrated into quality assurance workflows, enabling real-time adjustments and interventions based on predicted seal outcomes.

It may be provided that the machine-learning model comprises an autoencoder trained on a production data set of the packaging line using unsupervised learning.

An autoencoder is a type of neural network that learns to encode input data into a lower-dimensional representation and then reconstruct the original data from this compressed form. While typically associated with unsupervised learning, autoencoders can also be adapted for supervised tasks by incorporating labeled training data during the reconstruction phase or through auxiliary loss functions that account for labels in some way. In a production data set of a packaging line, an autoencoder trained using unsupervised learning could serve various purposes:
- Dimensionality Reduction: Autoencoders can reduce high-dimensional input features (e.g., sensor readings from multiple channels) to a lower-dimensional latent space that captures the most essential information while discarding noise and redundant details. This process helps in simplifying data representation, making it easier for subsequent supervised learning models or other analyses.
- Anomaly Detection: By reconstructing input features from their compressed representations, autoencoders can detect deviations from the learned norms. In a production context, this ability to identify anomalies in packaging line data (e.g., abnormal sealing behavior or equipment malfunctions) is valuable for proactive maintenance and quality control.
- Supervised Learning Integration: Although autoencoders are primarily unsupervised learning tools, they can be utilized in a supervised setting by incorporating labeled data into the training process. For example, one could use an auxiliary loss function that penalizes reconstruction errors for samples with known labels or modify the architecture to include classification layers at the end of the network. By doing so, autoencoders can learn both feature extraction and supervised tasks simultaneously.
- Data Preprocessing: Autoencoders can be used as data preprocessors before training other supervised learning models on production data sets. The learned low-dimensional representations from autoencoders often serve as a form of dimensionality reduction, which may improve the performance and efficiency of subsequent classifiers by focusing them on more relevant features.
- Transfer Learning: Autoencoder networks can be pretrained on large unlabeled datasets to learn generalizable feature representations before fine-tuning or transferring their learned knowledge to specific production data sets with labeled examples. This approach, known as transfer learning, allows leveraging the autoencoder's capabilities for tasks in different domains while adapting its output to meet supervised learning requirements.
- Continuous Learning: Autoencoders can be retrained periodically on new production data sets, allowing them to capture changing patterns and trends over time. This capability enables the model to maintain up-to-date representations of the packaging line's dynamics, which can subsequently inform supervised learning models or other quality monitoring mechanisms.
- Interpretability: Although neural networks are often criticized for their lack of interpretability, autoencoders with simpler architectures (e.g., small latent space dimensions) may offer some level of insight into the underlying data structure and feature importance. This understanding can help operators identify key factors affecting sealing performance or potential issues within production processes.

One aspect of the present disclosure provides a method of training a machine-learning model for use in the method of any of the aspects disclosed herein. For example, the method may comprise supervised learning and/or unsupervised learning, as disclosed above and elsewhere in the present disclosure.

One aspect of the present disclosure provides a machine-learning model, trained for use in the method of any of the aspects disclosed herein, in particular using the method of training disclosed above.

One aspect of the present disclosure provides a data processing apparatus, or a packaging line comprising a data processing apparatus. The data processing apparatus may comprise means for carrying out a method according to any one of the aspects described herein. Another aspect of the present disclosure relates to a data processing apparatus comprising a memory and one or more processors coupled to the memory, the one or more processors being configured to carry out any of the methods described herein. A data processing apparatus may comprise any kind of data processing hardware and may encompass all kinds of apparatus, devices, and machines for processing data, including by way of example a programmable processor, a computer, or multiple processors or computers.

One aspect of the present disclosure provides a computer program. Another aspect of the present disclosure relates to a computer-readable medium having stored thereon a computer program. The computer program may comprise instructions which, when the program is executed by a computer, cause the computer to carry out a method according to any one of the aspects described herein. A computer program may also be referred to as a program, software, a software application, an app, a module, a software module, a script, or code. A computer program may be written in a programming language, including compiled or interpreted languages. A computer program may be deployed in any form, including as a stand-alone product or as a module, component, subroutine, or other unit suitable for use in a computing environment.

One aspect of the present disclosure provides a non-transitory computer-readable medium storing a set of instructions that, when executed by one or more processors of an apparatus, cause the apparatus to carry out any of the methods described herein.

The terms used herein should generally be construed as understood by the average person skilled in the art, unless explicitly indicated otherwise. The following explanations may guide the understanding:

The term "Artificial intelligence" (AI) may be understood as referring to a branch of computer science that aims to develop machines or software capable of intelligent behavior, typically with the goal to mirror or surpass human intelligence in specific tasks. AI systems are designed to perform complex tasks such as reasoning, learning, perception, problem solving, and understanding natural language. These systems can typically adapt to new situations and improve their performance over time. The goal of AI is to create systems that can function autonomously and interact with their environment in a human-like manner.

The term "Artificial neural network" (ANN), or "neural network" (NN) in short, may be understood as a machine-learning or deep-learning model or algorithm. Neural networks are generally inspired by the human brain and typically comprise interconnected nodes or neurons organized into layers. Neural networks can be used to process data and learn from examples, enabling them to perform tasks such as image recognition, natural language processing, and more. A neural network typically comprises an input layer, one or more hidden layers, and an output layer. Through a process called training, neural networks can learn to perform specific tasks by adjusting their internal parameters, or "weights", based on labeled or unlabeled data

The term "Autoencoder" may be understood as a type of artificial neural network used primarily for unsupervised learning tasks, particularly in dimensionality reduction and feature extraction. It typically comprises an encoder and a decoder.

The term "Classifier" may be understood as a type of machine learning algorithm designed to categorize data into predefined classes or labels based on input features. This process, known as classification, is a fundamental task in supervised learning, where the classifier is trained on a dataset that contains both the input data and the corresponding correct labels.

The term "Control signal" may be understood as a type of signal used to regulate the operation of machinery or systems by conveying instructions or commands to various components. In the context of a packaging line, control signals may serve to coordinate the actions of different machines and ensuring that the packaging process operates smoothly and efficiently.

The term "Data processing apparatus" may be understood as any device or system designed to automatically handle data through various operations such as acquisition, storage, manipulation, management, and transmission. This apparatus encompasses a wide range of technologies, including hardware and software components that work together to process information efficiently.

The term "Large language model" (LLM), or "Language Model" (LM) in short, may be understood as referring to a type of machine-learning model that has been trained to recognize, generate, translate, and/or summarize vast quantities of written human language and textual data. LLMs are notable for their ability to achieve general-purpose language generation. LLMs comprise a large number of parameters, typically in the millions or often billions of parameters, which enable them to capture a wide array of linguistic nuances, patterns, and contexts.

The term "Machine-learning" may be understood as a subset of artificial intelligence that focuses on the development of algorithms and statistical models that enable computers to perform specific tasks without using explicit instructions. Instead, machine-learning systems learn and make predictions or decisions based on data. Machine-learning algorithms build a mathematical model based on sample data, known as training data, to make predictions or decisions without being explicitly programmed to perform the task. Machine learning can be employed in a variety of applications, including image and speech recognition, medical diagnosis, predictive analytics, and many more, where it enables systems to learn from and adapt to new data independently.

The term "Machine-learning algorithm" may be understood as a computational procedure that is designed to analyze data, learn from it, and identify patterns or make decisions based on the input data without being explicitly programmed for the task. Machine-learning algorithms leverage statistical techniques to enable systems to improve their performance on a specific task with more data over time. Machine-learning algorithms are the foundation upon which machine-learning models are built, providing the methods or processes through which data is transformed into actionable insight. Examples of machine-learning algorithms include linear regression, decision trees, support vector machines, and neural networks, among others.

The term "Machine-learning model" may be understood as referring to the output generated when a machine-learning algorithm is trained on a dataset. It represents the knowledge or understanding gained by the algorithm from the data, encapsulating the learned patterns or predictions. Essentially, a machine-learning model is what enables predictions or decisions based on new, unseen data, based on the learning it has derived from the training process. The machine-learning model is typically defined by its parameters, which may be adjusted during the training phase to minimize the difference between the predicted outcome and the actual outcome. Although, strictly speaking, "machine-learning algorithm" and "machine-learning model" have distinct definitions, it is not uncommon for these terms to be used interchangeably in casual discourse. This usage stems from the close relationship between algorithms and models in the workflow of machine-learning projects, where the algorithm is the means of creating the model. Therefore, these terms may be used synonymously herein unless the distinction is decisive.

The term "Main controller" in a packaging line may be understood as a central device or system that manages and coordinates the various operations of the packaging machinery and processes. It typically serves as the primary interface for controlling the flow of materials, synchronization of equipment, and execution of production tasks, ensuring that the packaging line operates efficiently and effectively.

The term "Measurement data" may be understood as quantitative and/or qualitative information collected through various means, such as instruments, sensors, or systems, that reflects specific characteristics or attributes of an object, process, or phenomenon.

The term "Package" may be understood as a container designed to enclose and/or protect liquid or semiliquid food product, made from a multilayer packaging material, throughout various stages of production, distribution, storage, and/or retailing.

The term "Packaging line", may be understood as a series of interconnected machines and processes designed to automate the packaging of products, particularly in manufacturing environments. A packaging line typically includes various stages such as filling, sealing, labeling, and boxing, enabling efficient and consistent packaging of goods for distribution and sale. In a food manufacturing context, a packaging line may include machines that fill packages with liquid or semiliquid products, seal them to prevent contamination, label them with nutritional information, and finally box them for shipment In particular, a packaging line may comprise a "Packaging machine" or "Filling machine" for producing packages from a multilayer packaging material.

The term "Quality indicator" in the context of a packaging line and a transversal sealing process may be understood as a metric or criterion used to evaluate the effectiveness and/or reliability of the packaging operations, particularly focusing on the integrity of seals and overall product quality. A quality indicator may help ensure that the packaged products meet safety standards, are free from defects, and maintain their intended quality during storage and transportation

The term "Transversal sealing" or "transversal seal" may be understood as a sealed end of a package that is created during the packaging process. The seals are typically formed using heat and pressure, which melt the thermoplastic layers of the packaging material (often polyethylene) to create a strong bond. In some cases, ultrasonic or induction sealing techniques may be employed.

The term "Transversal sealing process" may be understood as the method of sealing the ends of a packaging material in a direction that is perpendicular to the flow of the material. During the production of a Tetra Pak container or other type of package, for example, after a continuous tube of packaging material is filled with liquid food (such as milk or juice), transversal seals may be applied at subsequent portions of the tube. The sealing process may involve compressing and heating the material to create a secure closure. Once sealed, the tube may be cut between these seals to produce individual packages ready for distribution.

The term "Unique identifier" (UID) may be understood as a distinct numeric or alphanumeric string assigned to an entity within a system, ensuring that each entity can be uniquely recognized and accessed. UIDs are useful for differentiating between similar items, such as packages.

### BRIEF DESCRIPTION OF THE DRAWINGS

The present disclosure may be better understood by reference to the following drawings:
FIG. 1 illustrates a schematic illustration of a packaging line in accordance with one embodiment.
FIG. 2 illustrates an overview of a transversal sealing process in accordance with one embodiment.
FIG. 3 illustrates a schematic block diagram of a machine-learning model in accordance with one embodiment.
FIG. 4 illustrates a machine-readable code printed on an individual package to encode a quality indicator of that package in accordance with one embodiment.
FIG. 5 illustrates a schematic block diagram of an implementation in accordance with one embodiment.
FIG. 6A illustrates an implementation of the machine-learning model in accordance with one embodiment.
FIG. 6B illustrates an implementation of the machine-learning model in accordance with one embodiment.
FIG. 7 illustrates an example failure injection in accordance with one embodiment.
FIG. 8 illustrates an exemplary list of input parameters and extracted parameters in accordance with one embodiment.
FIG. 9 illustrates a method of monitoring a transversal sealing process in a packaging line in accordance with one embodiment.

### DETAILED DESCRIPTION

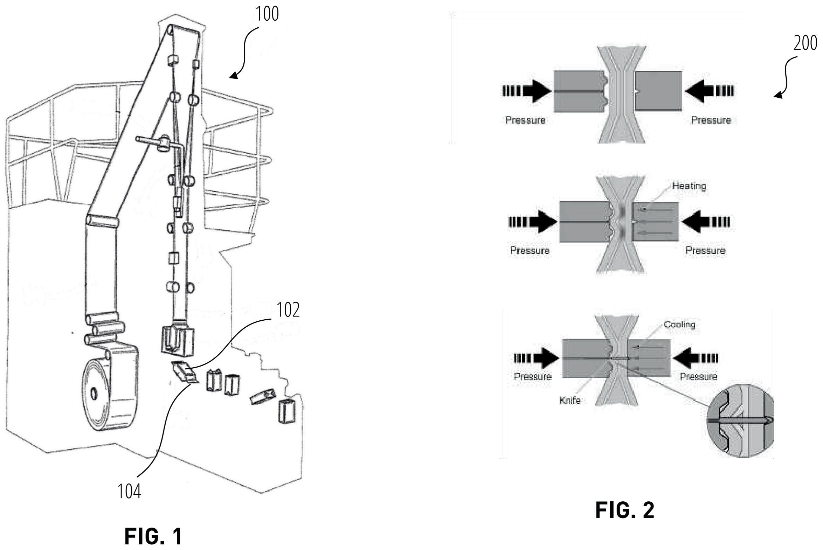

In the following, representative embodiments illustrated in the accompanying drawings will be explained. It should be understood that the illustrated embodiments and the following descriptions refer to examples which are not intended to limit the embodiments to one preferred embodiment. FIG. 1 illustrates a schematic illustration of a packaging line 100 in accordance with one embodiment. The packaging line 100 in the illustrated example is a roll-fed packaging line used for packaging liquid food products in carton-based packages 102. Already in the 1940s this type of packaging machines was introduced by Tetra Pak, and it is today a well- known approach for packaging milk and other liquid food products in a safe and cost-efficient manner. The general approach can also be used for non liquid food products, such as potato crisps. Today, packaging material is often printed and prepared in packaging material production centers, also referred to as converting factories, and is shipped to a site where the packaging line 100 is placed, e.g. a dairy. Usually, the packaging material is loaded onto a reel before being transported. After arriving at the site, the reel is placed in the packaging line 100 as illustrated in FIG. 1. During production, a web of packaging material can be fed from the reel through the packaging line 100. Even though not illustrated in FIG. 1, the packaging material may pass through a sterilization device, e.g., a hydrogen peroxide bath or an LVEB (Low-Voltage Electron Beam) station, for ensuring that the web is free from unwanted microorganisms. Before providing the food product, a tube can be formed from the web by forming a longitudinal sealing. The food product can be fed into the tube via a filling pipe and a valve may be used for regulating a flow through the filling pipe. A lower end of the tube can be fed into a folding and sealing device in which a transversal sealing 104 is made, the tube is folded according to folding lines, also referred to as weakening lines or creases, and cut off such that packages 102 can be formed.

FIG. 2 illustrates an overview of a transversal sealing process 200 in accordance with one embodiment. The transversal sealing process 200 is an important step in the packaging of food products, ensuring that the package 102 is sealed and the product is protected from contamination. In the illustrated embodiment, the transversal sealing process 200 comprises three phases:
1. Applying Pressure: The packaging line 100 applies pressure at a selected position on the tube containing the liquid food product so that the side walls of the tube come into contact, marking the end of one package 102 and the beginning of the next package 102.
2. Heating: The packaging line 100 heats the tube material at the selected position while maintaining the pressure. The heating serves to activate adhesive properties of the web material from which the tube is formed, creating a molten seal.
3. Cooling and Cutting: The packaging line 100 cools and cuts off the excess web material. As the tube or package 102 cools, the seal solidifies, forming a strong bond between the two sides of the packaging material. The package 102 is then cut off from the tube, resulting in the sealed package 102 as illustrated in FIG. 1.

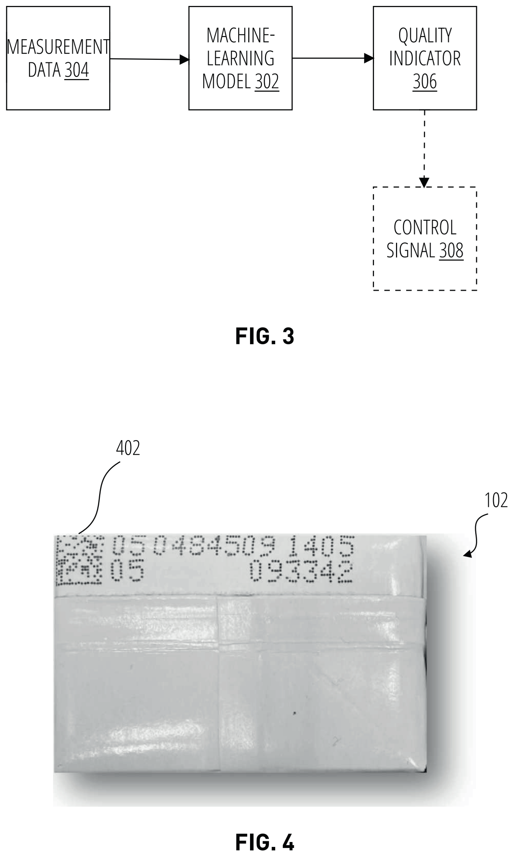

FIG. 3 illustrates a schematic block diagram of a machine-learning model in accordance with one embodiment. The machine-learning model 302 takes measurement data 304 as input and generates a quality indicator 306. Optionally, a control signal 308 for the packaging line 100 can be generated based on the quality indicator 306, e.g., by the machine-learning model 302 or by another component. The illustrated machine-learning model 302 is configured to be used in the monitoring of a transversal sealing process 200 in a packaging line 100. Accordingly, the measurement data 304 relates to the transversal sealing process 200, and the generated quality indicator 306 is a quality indicator of a transversal sealing 104 of at least one package 102 produced in the packaging line 100. The configuration and operation of the machine-learning model 302 as a monitoring tool for the transversal sealing process 200 within the packaging line 100 underscores the integration of machine-learning techniques into industrial manufacturing systems, enabling real-time quality assessment and adaptive control mechanisms to enhance productivity and maintain high production standards.

The generated quality indicator 306 may relate to an individual package 102 produced in the packaging line 100 and may be associated with a unique identifier of the individual package 102. The generated quality indicator 306 may be encoded in a machine-readable code 402 printed on the individual package 102, an example of which is illustrated in FIG. 4.

The following table illustrates example values of a quality indicator 306 encoded in the machine-readable code 402. As can be seen, the quality indicator 306 may comprise multiple, i.e., any number of, Key Health Indicators (KHI), namely KHI1 to KHI7 in the illustrated example. The table also shows the unique identifier of the package 102, which is "000523" in the example. Furthermore, the table includes a Quality Feedback field ("QF"). Regarding the Quality Feedback field, when the quality indicator 306 is generated, feedback on the output may be asked to measure the model performance and potentially re-train the model. For example, such feedback may come from standard quality checks performed by an operator or from automated quality checks done by any type of external device that measures the TS quality.

| **UID** | **KHI1** | **KHI2** | **KHI3** | **KHI4** | **KHI5** | **KHI6** | **KHI7** | QF |
|---|---|---|---|---|---|---|---|---|
| 0005 | 1.532 | 6262.6 | 5656 | 60.233 | 26 | 26262 | 65 | ... |
| 23 | 63 | | | | | | | |

Generally speaking, KHIs may be understood as quality indicators for the specific function. The KHIs may be extracted from raw data, which may be sampled in high frequency, to reduce the dimensionality of the data without losing relevant information. The KHIs might be extracted in several ways: Processing the high frequency data with domain knowledge physical modelling: For example, the n most relevant indicators may be extracted from the raw data, such as voltage and/or current slicing, as well as statistical parameters like computing max, min, mean, median, STD, kurtosis, skewness, peak to peak, and/or crest factor in different areas of the pulse. The different areas may be defined by the physical model, and may give indications on different failure modes. For example, the first n milliseconds of the voltage pulse represent the transitory state of the electrical components and might give indications in failures and/or anomalies on a transformer or in general power transferring to the transversal sealing process. The second and final part of the pulse, which may represent a state in which the system is steady, may give indications on energy transferring from an inductor to the packaging material. Both may be used to generate KHIs. The second KHI may be generated by a non-supervised deep-learning algorithm. In one embodiment disclosed herein, an autoencoder is used for this purpose, which is trained on baseline data to extract the relevant features from the raw data. The autoencoder latent space features are then used as KHIs to classify the output. The following is a list of example types of KHIs which may be used in any suitable combination in certain embodiments:
- Pressure KHI: Reflects pressure application. The KHIs may be the output of analytics and/or AI models that identify the best indicators to represent the pressure.
- Sealing KHI: Reflects sealing-power transfer from the generator to the packaging material.
- Cutting KHI: Relates to the cutting of the (semi-finished) product.

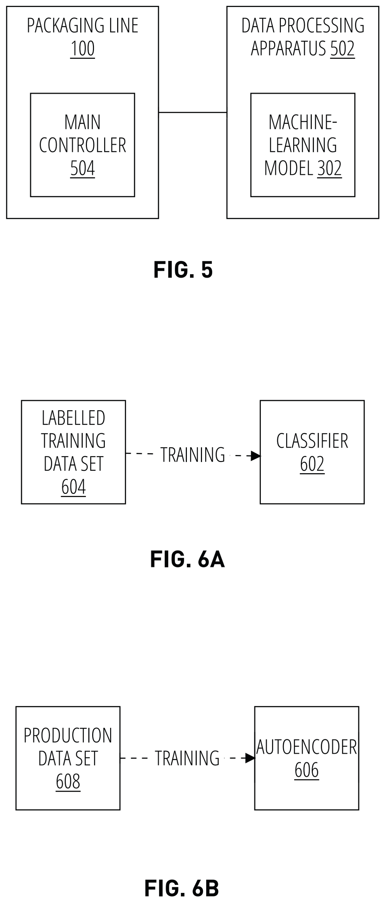

FIG. 5 illustrates a schematic block diagram of an implementation in accordance with one embodiment. The implementation comprises the machine-learning model 302 executing on a data processing apparatus 502, and the packaging line 100 being controlled by a separate a main controller 504. The depicted block diagram highlights a separation between the machine-learning model 302's operations on the data processing apparatus 502 and the main controller 504's oversight of the packaging line 100, demonstrating the interplay between machine-learning capabilities and traditional control systems within an industrial setting. The separation enhances system flexibility, allowing easier updates to the machine-learning model 302 without disrupting the transversal sealing process 200 or the operation of the packaging line 100.

FIG. 6A illustrates first example of a possible implementation of the machine-learning model 302 in accordance with one embodiment. In the depicted embodiment, the machine-learning model 302 comprises, or is, a classifier 602. The classifier 602 can be trained using a labelled training data set 604. This training process typically involves teaching the classifier 602 to recognize patterns and correlations between input features and their corresponding labels, thereby equipping it with the ability to make accurate predictions on unseen data points. Once adequately trained, the classifier 602 can then be deployed within the transversal sealing process 200 to generate meaningful quality indicators 306, contributing to efficient and reliable system operations that align with predefined quality standards or production requirements.

The classifier 602 may be a binary classifier. Accordingly, the generated quality indicator 306 can be a binary indicator, i.e., a two-value representation used to classify the sealing performance of packages 102 into either 'acceptable' or 'unacceptable'. In an exemplary evaluation of an embodiment of the binary classifier 602, the following classification results could be obtained:

| | **Precision** | **Recall** |
|---|---|---|
| Acceptable | 0.984 | 0.832 |
| Unacceptable | 0.993 | 0.999 |

FIG. 6B illustrates second example of a possible implementation of the machine-learning model 302 in accordance with one embodiment. In the depicted embodiment, the machine-learning model 302 comprises, or is, an autoencoder 606. The autoencoder 606 can be trained using a production data set 608. The production data set 608 may comprise raw or unprocessed data collected during the operation of the packaging line 100. The autoencoder 606's training may involve learning to compress this input data into a lower-dimensional representation (encoding) and then reconstructing it back to its original form as closely as possible (decoding).

In the following, a test procedure will be described in connection with one exemplary embodiment:
Firstly, a baseline condition is established by setting and measuring all the components in their nominal condition. Certain settings (mechanical and/or electrical) may be changed in the range of admissible tolerance in order to have a complete coverage of possible nominal conditions. The resulting dataset represents the model baseline condition, and the training may be done on this dataset. Packages may be collected for each one of multiple tests. The collected packages may be analyzed and used as true labels in the dataset.

Secondly, failures can be injected when possible based on the functional decomposition, such as pressure application, interaction of the components with the packaging material (dollies, springs, etc.), heat transfer, and/or power transfer (inductors). For each test, the most critical parameters may be collected. The produced packages may be analyzed as was done for the baseline with standard quality checks (such as dissolving and specification comparison).

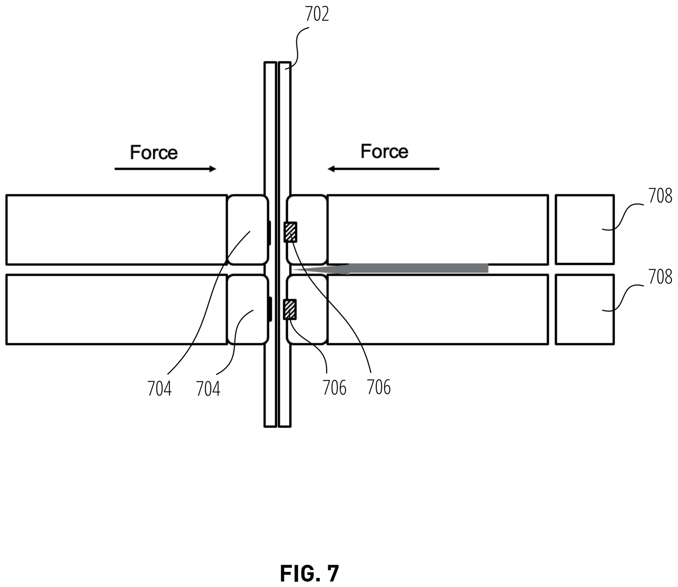

FIG. 7 illustrates an example of the failure injection mentioned above. In this example, failures have been applied on the pressure application system modifying the counter pressure surface. Specifically, when removing one or both of the depicted dollies, the pressure profile is modified because the pack mat and inductor distance changes, compromising the effective power transmitted to the pack mat, Furthermore, the product cannot be squeezed out from the transversal sealing area, causing it to be trapped in the inductor cave with effects on the sealing-cutting interaction. In practical tests, this failure has been injected in three ways: (a) removing dollies from 1-2 links, (b) removing only the top or bottom dolly from 1-2 links, (c) mounting one dolly reversed (such as bottom up).

Thirdly, after the failure injection, the baseline checks may be repeated to ensure the model stability.

Fourthly, the data may then be processed as already described, considering the following steps: The dataset has been labelled using the ground truth final pack quality analysis. The open packages provided by a pack ID have been used to label the specific raw and processed data from the system aggregated by package ID. Statistical features have been extracted from the raw data (such as mean, median, max, min, RMS, Kurtosis, Crest factor, peak to peak) for each collected variable (such as voltage, current phase, power out, frequency, impedance). Additional parameters may be computed, such as power error (difference between power out and power set) and energy (integral in time of the power output). For deep-learning analysis, the raw data may be processed by a time-convolutional autoencoder that extracts the most relevant feature that describes the input signal. The extracted features may then be classified by a one-class SVM model and separated into good/bad.

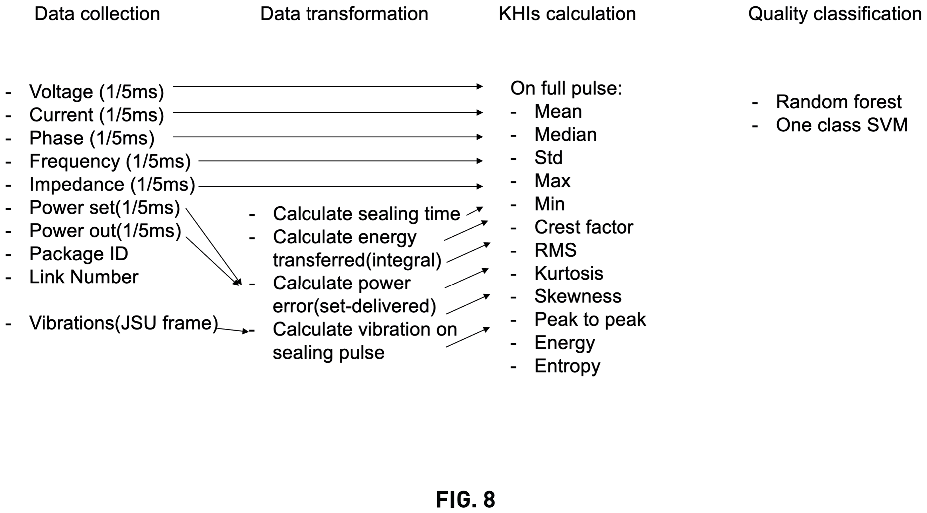

FIG. 8 illustrates a concrete example of input parameters and extracted features. In the illustrated example, a comprehensive list of possible indicators is extracted.

In certain configurations, the ML model classifier may decide the most relevant parameters to classify a datapoint. In other words, the classifier may give more weight to the most relevant features to classify a specific datapoint automatically. In certain embodiments, the results are computed considering the entire dataset.

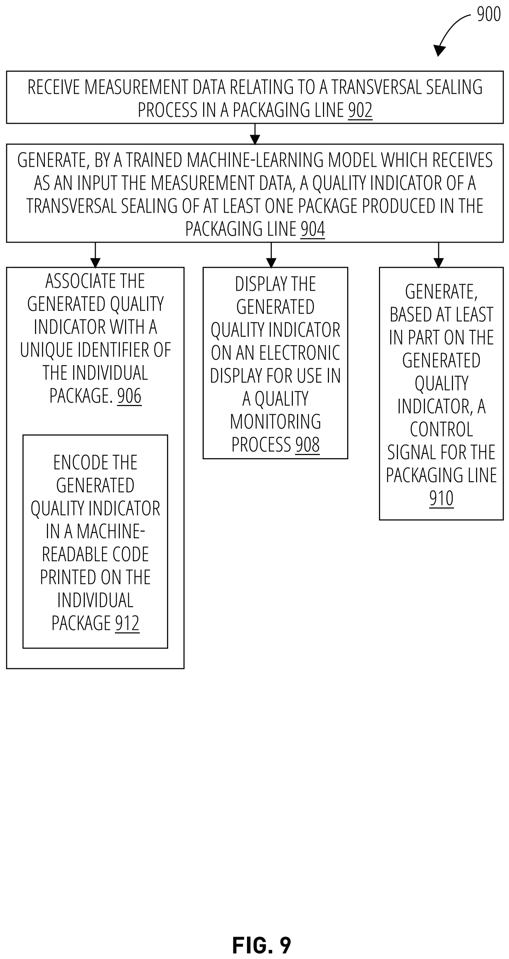

FIG. 9 illustrates a method of monitoring 900 in accordance with one embodiment. The method is for monitoring a transversal sealing process 200 in a packaging line 100. The method, or parts thereof, may be computer-implemented.

In the receiving step 902, the method of monitoring 900 receives measurement data 304 relating to the transversal sealing process 200. In the quality indicator generating step 904, the method of monitoring 900 generates, by a trained machine-learning model 302 which receives as an input the measurement data 304, a quality indicator 306 of a transversal sealing 104 of at least one package 102 produced in the packaging line 100.

The method of monitoring 900 may further comprise an associating step 906 in which the generated quality indicator 306 is associated with a unique identifier of the individual package 102. The generated quality indicator 306 may be encoded in a machine-readable code 402 printed on the individual package 102 in an encoding step 912, and as illustrated in FIG. 4.

The method of monitoring 900 may further comprise a displaying step 908 in which the generated quality indicator 306 is displayed on an electronic display for use in a quality monitoring process.

The method of monitoring 900 may further comprise a control signal generating step 910 in which a control signal 308 for the packaging line 100 is generated based at least in part on the generated quality indicator 306.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Embodiments of the present disclosure may be implemented on a computer system. The computer system may be a local computer device (e.g., personal computer, laptop, tablet computer or mobile phone) with one or more Processors and one or more storage devices or may be a distributed computer system (e.g., a cloud computing system with one or more Processors and one or more storage devices distributed at various locations, for example, at a local client and/or one or more remote server farms and/or data centers). The computer system may comprise any circuit or combination of circuits. In one embodiment, the computer system may include one or more Processors which can be of any type. As used herein, Processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics Processor, a digital signal Processor (DSP), multiple core Processor, a field programmable gate array (FPGA), or any other type of Processor or processing circuit. Other types of circuits that may be included in the computer system may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system may include one or more storage devices, which may include one or more Memory elements suitable to the particular application, such as a main Memory in the form of random access Memory (RAM), one or more hard drives, and/or one or more drives that handle removable media such as compact disks (CD), flash Memory cards, digital video disk (DVD), and the like. The computer system may also include a display device, one or more speakers, and a keyboard and/or controller, which can include a mouse, trackball, touch screen, voice-recognition device, or any other device that permits a system user to input information into and receive information from the computer system.

Some or all of the method steps may be executed by (or using) a hardware apparatus, like for example, a Processor, a microprocessor, a programmable computer or an electronic circuit. In some embodiments, some one or more of the most important method steps may be executed by such an apparatus.

Depending on certain implementation requirements, embodiments of the present disclosure can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH Memory, having electronically readable control signals stored thereon, which cooperate (or are capable of cooperating) with a programmable computer system such that the respective method is performed. Therefore, the digital storage medium may be computer readable.

Some embodiments comprise a data carrier having electronically readable control signals, which are capable of cooperating with a programmable computer system, such that one of the methods described herein is performed.

Generally, embodiments of the present disclosure can be implemented as a computer program product with a program code, the program code being operative for performing one of the methods when the Computer program product runs on a computer. The program code may, for example, be stored on a machine readable carrier.

Other embodiments comprise a computer program for performing one of the methods described herein, stored on a machine readable carrier.

A further embodiment is a computer program having a program code for performing one of the methods described herein, when the computer program runs on a computer.

A further embodiment is a storage medium (or a data carrier, or a computer-readable medium) comprising, stored thereon, the computer program for performing one of the methods described herein when it is performed by a Processor. The data carrier, the digital storage medium or the recorded medium are typically tangible and/or non-transitory.

A further embodiment is an apparatus as described herein comprising a Processor and the storage medium.

A further embodiment is a data stream or a sequence of signals representing the computer program for performing one of the methods described herein. The data stream or the sequence of signals may, for example, be configured to be transferred via a data communication connection, for example, via the internet.

A further embodiment is a processing means, for example, a computer or a programmable logic device, configured to, or adapted to, perform one of the methods described herein.

A further embodiment is a computer having installed thereon the computer program for performing one of the methods described herein.

A further embodiment is an apparatus or a system configured to transfer (e.g., electronically or optically) a Computer program for performing one of the methods described herein to a receiver. The receiver may, for example, comprise a computer, a mobile device, a Memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

As previously discussed, the transversal sealing process 200 comprises the following phases: applying pressure, heating and cooling and cutting. The transversal sealing process 200 is performed by the sealing device. The measurement data relating to the transversal sealing process may comprise a driving signal configured to control the sealing device. Preferably, the measurement data may comprise a pressure signal indicative of the pressure to be impressed by the sealing device. Preferably, the measurement data may comprise a heating signal indicative of the heat to be impressed by the sealing device. Preferably, the measurement data may comprise a cooling and cutting signal indicative of the cooling time interval that occurs between the heating of the packaging material and the cutting thereof, to be performed by the sealing device. In particular, the measurement data may comprise a driving signal indicative of transversal sealing of a certain package, and the resulting quality indicator is indicative of the quality of said certain package produced in the packaging line.

### REFERENCE SIGNS

100 packaging line
102 package
104 transversal sealing
200 transversal sealing process
302 machine-learning model
304 measurement data
306 quality indicator
308 control signal
402 machine-readable code
502 data processing apparatus
504 main controller
602 classifier
604 labelled training data set
606 autoencoder
608 production data set
900 method of monitoring
902 receiving step
904 quality indicator generating step
906 associating step
908 displaying step
910 control signal generating step
912 encoding step

## Claims

1. A method of monitoring a transversal sealing process in a packaging line for producing packages from a multilayer packaging material, wherein the method comprises:
receiving measurement data relating to the transversal sealing process; and
generating, by a trained machine-learning model which receives as an input the measurement data, a quality indicator of a transversal sealing of at least one package produced in the packaging line.

2. The method of claim 1, wherein the measurement data is received while the at least one package is produced in the packaging line.

3. The method of claim 1 or 2, wherein the generated quality indicator relates to an individual package produced in the packaging line.

4. The method of claim 3, further comprising:
associating the generated quality indicator with a unique identifier of the individual package.

5. The method of claim 4, wherein the associating step comprises:
encoding the generated quality indicator in a machine-readable code printed on the individual package.

6. The method of any one of claims 1 to 5, further comprising:
displaying the generated quality indicator on an electronic display for use in a quality monitoring process, in particular a real-time quality monitoring process.

7. The method of any one of claims 1 to 6, further comprising:
generating, based at least in part on the generated quality indicator, a control signal for the packaging line.

8. The method of any one of claims 1 to 7, wherein the machine-learning model is deployed on a data processing apparatus separate from a main controller of the packaging line.

9. The method of any one of claims 1 to 8, wherein the measurement data includes one or more of:
process parameters;
control parameters;
additional sensor measurements.

10. The method of any one of claims 1 to 9, wherein the quality indicator is a binary indicator.

11. The method of any one of claims 1 to 10, wherein the machine-learning model comprises a classifier trained on a labelled training data set using supervised learning; or
wherein the machine-learning model comprises an autoencoder trained on a production data set of the packaging line using unsupervised learning.

12. The method according to any of the previous claims, wherein the transversal sealing process (200) is performed by a sealing device and wherein the measurement data relating to the transversal sealing process comprise a driving signal configured to control the sealing device.

13. The method according to the previous claim, wherein the transversal sealing process (200) comprises the phases of applying pressure, heating, cooling and cutting, wherein the measurement data comprises at least one of:
- a pressure signal indicative of the pressure to be impressed by the sealing device,
- a heating signal indicative of the heat to be impressed by the sealing device,
- a cooling and cutting signal indicative of the cooling time interval that occurs between the heating of the packaging material and the cutting thereof, to be performed by the sealing device.

14. A data processing apparatus, or a packaging line comprising a data processing apparatus, the data processing apparatus comprising means for carrying out the method any one of claims 1 to 12.

15. A computer program, or a computer-readable medium having stored thereon a computer program, the computer program comprising instructions which, when the program is executed by a computer, cause the computer to carry out the method any one of claims 1 to 12.
